(19) **Europäisches Patentamt**
**European Patent Office**
**Office européen des brevets**

(11) **EP 1 118 847 A2**

(12) **EUROPÄISCHE PATENTANMELDUNG**

(43) Veröffentlichungstag:
**25.07.2001 Patentblatt 2001/30**

(51) Int Cl.[7]: **G01J 4/00**

(21) Anmeldenummer: **01100646.7**

(22) Anmeldetag: **11.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.01.2000 DE 10001810**

(71) Anmelder: **A. Krüss Optronic GmbH**
**22297 Hamburg (DE)**

(72) Erfinder: **Pannhoff, Helge**
**20535 Hamburg (DE)**

(74) Vertreter: **DIEHL GLAESER HILTL & PARTNER**
**Patentanwälte**
**Königstrasse 28**
**22767 Hamburg (DE)**

(54) **Polarimeter**

(57) Die Erfindung bezieht sich auf ein Polarimeter zur Ermittlung von Eigenschaften einer Probe über Phasenauflösung und Fourieranalyse mit einer Quelle (1, 2, 3, 4, 5) für linear polarisierte Strahlung, einer Probenkammer zur Aufnahme der Polarimeterröhre (6) für die Probe, einen Analysator (7), der am Ausgang der Probenkammer (6) angeordnet ist, der das von der Probe optisch beeinflusste Licht erhält und der kontinuierlich drehbar ist, einen Motor mit Inkrementalgeber (10) als Antrieb für den Analysator (7), einen Detektor (9) mit Linse (8), der das vom Analysator (7) ausgegebene Signal hinsichtlich Analysatorstellung und Intensitätssignal erfasst und an einen Analog-Digitalwandler (11) abgibt, der von dem Inkrementalgeber (19) getriggert wird, und einen Rechner (12), der das Ausgangssignal vom Analog-Digitalwandler (11) erhält und über eine Fourieranalyse eine Aussage über die Eigenschaften der Probe macht.

**Beschreibung**

Die Erfindung bezieht sich auf einen Polarimeter zur Ermittlung von Eigenschaften einer Probe.

Die Erfindung betrifft einen Polarimeter zur Ermittlung von Eigenschaften einer Probe über Phasenauflösung und Fourieranalyse, aufweisend eine Strahlungsquelle für linear polarisierte Strahlung, eine Polarimeterröhre oder Probenkammer zur Aufnahme der Probe, einen Analysator, der am Ausgang der Polarimeterröhre angeordnet ist, der das von der Probe optisch beeinflusste Licht empfängt und drehbar gelagert ist, einen Motor mit Inkrementalgeber, einen Detektor mit Linse, der das vom Analysator ausgegebene Signal hinsichtlich Analysatorstellung und Intensitätssignal erfasst und an einen Analog-Digitalwandler abgibt, der von dem Inkrementalgeber getriggert wird, und einen Rechner, der das Ausgangssignal vom Analog-Digitalwandler erhält und über eine Fourieranalyse und Phasenbestimmung eine Aussage über die Eigenschaften der Probe macht.

Di Figur zeigt ein Blockdiagramm eines Polarimeters gemäß der Erfindung.

In der Darstellung einer Ausführungsform der Erfindung besteht die Strahlungsquelle aus einem Hohlspiegel 1 einer Halogenlampe 2, einer asphärischen Kondensorlinse 3 und einem Interferenzfilter 4. Die Strahlung wird mittels eines Polfilters 5 linear polarisiert. Der Polfilter 5 kann ein Folienfilter oder ein Kristallfilter sein.

Das polarisierte Licht wird durch eine Standard-Polarimeterröhre 6 geschickt, wo es auf einer definierten Länge durch die optische Aktivität der darin befindlichen Probe beeinflusst wird. Es findet bei optischer Aktivität des Mediums eine Drehung der Polarisationsrichtung in Abhängigkeit von Stoffkonzentration, Wellenlänge, Temperatur und Röhrenlänge statt.

Ein nachgeordneter Modul 7 besteht aus einem Analysator aus dem gleichen Material, wie das des Polfilters 5. Er ist in einem drehbaren Lager gefasst und mit einem Motor mit Inkrementalgeber 10 ausgestattet. Gleichzeitig wird ein Startsignal mit jedem Umdrehungsstart ausgegeben, d.h. bei Phase y = 0.

Eine Linse 8 fokussiert das nun modulierte auf einem Detektor 9 fallende Signal. Der Inkrementalgeber 10 triggert einen Analog-Digitalwandler 11, so dass ein fester Phasenbezug zwischen Analysatorstellung und Intensitätssignal erzeugt wird und zwar auch dann, wenn Gleichlaufschwankungen des Motors auftreten sollten.

Aus dem Startsignal und den gewandelten Werten des Wandlers 11 entsteht eine Signalkette, die in einem Microcontroller oder einem vergleichbaren Rechner 12 ausgewertet wird, indem die 1. Harmonische der Signalkette durch eine Fourier-Analyse und anschließender Phasenbestimmung ausgewertet wird.

Der Microcontroller 12 dient gleichzeitig als Schnittstelle zum Display 13, einem Drucker oder weiteren Peripheriegeräten und ermöglicht die Anpassung an Linearisierungstechniken, unterschiedlichen Skalenumrechnungen oder weiteren Standards, auch bietet er die Möglichkeit der Prozesssteuerung. Mit einem zusätzlichen Detektor kann die Leistung der Strahlungsquelle geregelt werden und/ oder eine Referenzmessung ohne Probe erfolgen, um ggf. die Auflösung zu erhöhen.

Das Licht einer Strahlungsquelle wird gemäß der Erfindung durch einen Polarisator linear polarisiert. Über eine Strahlformungsoptik wird die Strahlung durch die Probenkammer (Polarisationsröhre) geschickt. Die Strahlung passiert nun einen Analysator, der mit nahezu konstanter Winkelgeschwindigkeit rotiert. Die Drehbewegung wird mit einen optischen Encoder in Signalpulse umgesetzt, welche im direkten Verhältnis zur Winkelposition des Analysators stehen.

Hinter dem Analysator ist ein Detektor positioniert, der die durchgelassene Intensität erfasst. Das Signal, welches aufgenommen wird, folgt dem Malus'schen Gesetz:

$$I = I_0 \cos^2 \alpha \qquad \text{oder} \qquad I = \frac{1}{2} I_0 (1 + \cos 2\alpha)$$

Der Winkel $\alpha$ wird durch den Encoder definiert. $_0$ beschreibt die eingestrahlte Intensität.

Wird bei jedem Signalimpuls des Encoders die Intensität am Detektor durch einen Analog-Digitalwandler aufgenommen, entsteht ein Datensatz entsprechend dem Malus'schen Gesetz. Da es sich hierbei um ein harmonisches Signal mit zwei Perioden je Umdrehung Analysator handelt, kann eine diskrete Fourier-Analyse erfolgen:

$$H(f_0) = \int_0^n I(i) e^{-j2\pi f_0 i} \, di$$

also:

$$\text{Re}(f_0) = \sum_{i=0}^{n} I(i) \cos(2\pi f_0 i)$$

$$\text{Im}(f_0) = \sum_{i=0}^{n} I(i) \sin(2\pi f_0 i)$$

(mit der bekannten Frequenz $f_0$, da ein Umlauf zwei Hell-Dunkel-Wechsel ergeben). Der Quotient aus Real- und Imaginärteil ergibt somit auf einfachem Wege direkt die Phasenschiebung:

$$\Theta(f_0) = \arctan \frac{\mathrm{Im}(f_0)}{\mathrm{Re}(f_0)}$$

Folglich hängt das Auflösungsvermögen nicht mehr direkt am Encoder, sondern es kann durch die Anzahl der Stützstellen gesteigert werden. Hierzu wird eine beliebig hohe Anzahl an Umdrehungen des Analysators erfasst und die größere Periodenzahl ausgewertet.

Das System arbeitet auch völlig intensitätsunabhängig, nur die Frequenz muss ermittel werden.

Im Messbetreib wird erst die Nullprobe vermessen, was den Drehwinkel Θ=0 ergibt, danach wird die Probe eingesetzt und mit der vorherigen Kalibrierung ist der Drehwinkel, durch die optische Aktivität der Probe bedingt, direkt ablesbar.

Auch ist der Einsatz einer Referenzküvette, welche den Drehwinkel Θ=0 darstellt, denkbar. Theoretisch ist damit eventuelles Driftverhalten der Elektronik reduzierbar und die Auflösung zu steigern.

Der Einsatz eine temperierbaren Küvette und einer wellenlängenstabilen Strahlungsquelle ermöglicht auch eine zusätzliche Steigerung des Auflösungsvermögens. Korrekturfaktoren können in Form von Funktionen oder Tabellen der Software zur Auswertung hinterlegt werden.

Eine Auswertgung der Phaseninformation kann auch in Lock-In-Technik mit einer entsprechenden Verstärkeranordnung erfolgen.

Für den Betrieb im Prozess, wo es nicht auf einen großen Messbereich ankommt, ist gegebenenfalls eine einfachere Anordnung ausreichend. Polarisator und Analysator stehen in einem festen Winkel zueinander, und es wird lediglich die Intensität aufgenommen und gegenüber einer Look-up-Tabelle ausgewertet. Das Beleuchtungsspektrum sollte in einem Bereich liegen, der frei von Quereinflüssen ist (Absorption, Streuung). Für Zucker kann hier das nahe Infrarot interessant sein, in welchem noch keine Wasserbanden und Sender-Empfänger-Kombinationen existieren (bei ca. 850nm).

Parallel zur Probenkammer wird ein Referenzkanal aufgebaut, um Driften zu eliminieren. Der Detektor und die primäre anschließende Elektronik wird konstant temperiert (z.B. auf T=40°C, wo das Signal-Rausch-Verhältnis günstig zur Quanteneffizienz steht).

Der eindeutige Signalbereich von nur α±45° kann folgendermaßen erweitert werden:

Einsatz von zwei Analysatoren:

Die Durchlassrichtungen beider Analysatoren stehen in einem Winkel von 45° zueinander. Somit ist das Vorzeichen eindeutig und das Signal bei stetigem Wechsel über 360° definiert.

Einsatz von drei Analysatoren

Die Durchlassrichtung der drei Analysatoren stehen in einem Winkel von 120° zueinander, somit ist das Vorzeichen eindeutig und das Signal über 360° definiert.

Die Auswertung erfolgt nach dem Phasenshift-Verfahren, durch die drei Intensitäten ist der Winkel eindeutig definiert:

$$\tan\Theta = \sqrt{3}\ \frac{I_3 - I_2}{2I_1 - I_2 - I_3}$$

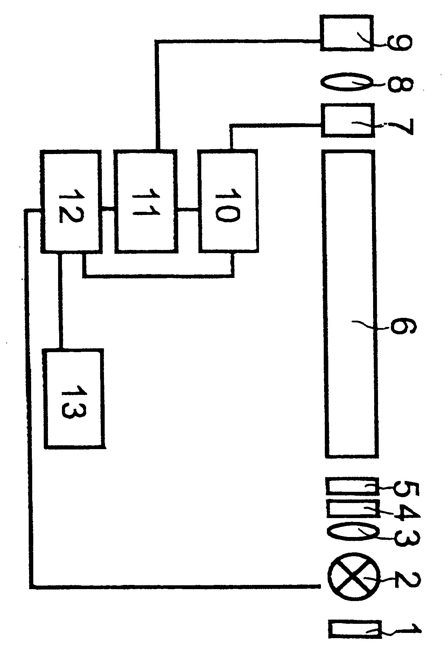

**Patentansprüche**

1. Polarimeter zur Ermittlung von Eigenschaften einer Probe über Phasenauflösung und Fourieranalyse, aufweisend

   eine Quelle (1, 2, 3, 4, 5) für linear polarisierte Strahlung,

   eine Probenkammer zur Aufnahme der Polarimeterröhre (6) für die Probe,

   einen Analysator (7), der am Ausgang der Probenkammer (6) angeordnet ist, der das von der Probe optisch beeinflusste Licht erhält und der kontinuierlich drehbar ist,

   einen Motor mit Inkrementalgeber (10) als Antrieb für den Analysator (7),

   einen Detektor (9) mit Linse (8), der das vom Analysator (7) ausgegebene Signal hinsichtlich Analysatorstellung und Intensitätssignal erfasst und an einen Analog-Digitalwandler (11) abgibt, der von dem Inkrementalgeber (19) getriggert wird,

   und einen Rechner (12), der das Ausgangssignal vom Analog-Digitalwandler (11) erhält und über eine Fourier-analyse eine Aussage über die Eigenschaften der Probe macht.

2. Polarimeter zur Ermittlung von Eigenschaften einer Probe über Phasenauflösung und Fourieranalyse, aufweisend

   eine Quelle (1, 2, 3, 4, 5) für linear polarisierte Strahlung,

   einen drehbar gelagerten Polfilter (5), zur Aufnahme der Probe,

   einen Analysator (7), der am Ausgang der Probenkammer (6) angeordnet ist und der das von der Probe optisch beeinflusste Licht erhält,

   einen Motor mit Inkrementalgeber (10) als Antrieb für den Polfilter (5).

einen Detektor (9) mit Linse (8), der das vom Analysator (7) ausgegebene Signal hinsichtlich Probenkammerstellung und Intensitätssignal erfasst und an einen Analog-Digitalwandler (11) abgibt, der von dem Inkrementalgeber (19) getriggert wird,

und einen Rechner (12), der das Ausgangssignal vom Analog-Digitalwandler (11) erhält und über eine Fourieranalyse und Phasenbestimmung eine Aussage über die Eigenschaften der Probe macht.

3.  Polarimeter nach einem der Ansprüche 1 oder 2, dadurch gekennzeichnet, dass dem Analysator (7) zusätzlich simultan ein Referenzkanal zwecks Erhöhung der Auflösung zugeführt wird.

4.  Polarimeter nach mindestens einem der Ansprüche 1 bis 3, dadurch gekennzeichnet, dass die Strahlungsleistung der Quelle (1, 2, 3, 4, 5) aktiv geregelt oder stabilisiert wird.

5.  Polarimeter nach mindestens einem der Ansprüche 1 bis 4, dadurch gekennzeichnet, dass der Detektor (9) eine Verstärkereinheit mit umfasst.